# EUROPÄISCHE PATENTANMELDUNG

(11) **EP 4 468 215 A1**
(43) Veröffentlichungstag der Anmeldung: **27.11.2024**
(21) Anmeldenummer: 23175552.1
(22) Anmeldetag: 26.05.2023
(51) Int. Cl.: G06N 20/20, G06T 7/00

(54) **COMPUTER-IMPLEMENTIERTES VERFAHREN ZUM BETRIEB EINES TECHNISCHEN GERÄTS**

(71) Anmelder: Siemens Aktiengesellschaft, 80333 München (DE)
(72) Erfinder: Schall, Daniel, 2020 Hollabrunn (AT)
(74) Vertreter: Siemens Patent Attorneys

(57) **Zusammenfassung**

Computer-implementiertes Verfahren zum Betrieb eines technischen Geräts (TD) durch ein System mit einer Cloud-Plattform (CP) und einer verbundenen Edge-Plattform (EP), wobei folgende Schritte ausgeführt werden:
51) Erfassen einer Menge an Daten (D) von dem technischen Gerät (TD) durch zumindest einen Sensor, welcher von der Edge-Plattform (EP) umfasst ist,
S2) Bilden von zumindest einer ersten Teilmenge (DC) und zumindest einer zweiten Teilmenge (DE) aus der Gesamtmenge an Daten (D) anhand zumindest einer vorbestimmten Metrik durch die Edge-Plattform (EP),
S3) Übertragen der zumindest ersten Teilmenge (DC) an die Cloud-Plattform (CP), und Erzeugen und Trainieren eines Cloud-Modells auf Basis künstlicher Intelligenz mithilfe der zumindest einen ersten Teilmenge (DC) durch die Cloud-Plattform (CP),
S4) Übertragen des Cloud-Modells an die Edge-Plattform (EP) und Trainieren des Cloud-Modell mit der zumindest einen zweiten Teilmenge (DE) als Edge-Modell durch die Edge-Plattform (EP),
S5) Erfassen von aktuellen Daten von dem technischen Gerät, Erzeugen von Prognose-Daten mithilfe des Edge-Modells, und Betreiben des technischen Geräts (TD) mit den Prognose-Daten, durch die Edge-Plattform (EP).

## Beschreibung

*Unabhängig vom grammatikalischen Geschlecht eines bestimmten Begriffes sind Personen mit männlicher, weiblicher oder anderer Geschlechteridentität mit umfasst.*

Die Erfindung betrifft ein computer-implementiertes Verfahren zum Betrieb eines technischen Geräts durch ein System mit einer Cloud-Plattform und einer verbundenen Edge-Plattform.

Die Erfindung betrifft ein System und ein Computer-Programm-Produkt.

In industriellen Produktionsanlagen werden häufig IT-Lösungen mit Klienten-Server-Architekturen eingesetzt, um beispielsweise Produktionsanlagen oder damit verbundene Anlagen zu überwachen und/oder zu steuern.

Dabei können Edge-Geräte in einem Fertigungskontext verwendet, um Daten zu sammeln und die Daten in die Cloud zu übertragen.

In der Cloud werden spezialisierte Dienste für maschinelles Lernen (ML) verwendet, um Datenanalyse- und ML-Aufgaben wie Modelltraining und Modelloptimierung durchzuführen.

Dabei werden Modelle für die Modellvorhersage an der Edge bereitgestellt.

Die Vor- und Nachteile des Modelltrainings und der Vorhersage in einem Cloud-Edge-Kontext nach dem Stand der Technik sind folgende:
Cloud-Lösungen sind hinsichtlich eines Modell-Trainings günstig, wenn das Training elastisch skaliert werden soll (engl. "pay-as-you-go"), wird aber teuer für die Verarbeitung großer Datenmengen hinsichtlich benötigter Speicher-, Rechen- und Kommunikationsressourcen.
Cloud-Lösungen sind hinsichtlich einer Vorhersage günstig, da keine Vor-Ort-Infrastruktur benötigt wird, ist jedoch sensitiv wegen einer starken Abhängigkeit von der Verfügbarkeit des Netzwerks.

Dementgegen sind Edge-Lösungen hinsichtlich eines Modell-Trainings günstig, da kein Daten-Transfer zur Cloud benötigt wird, erfordert jedoch höhere Aufwände hinsichtlich Hardware and der Edge, womit eine höhere System-Komplexität einhergeht.

Eine gute Planbarkeit der Edge-Hardware ist häufig nicht gegeben, wodurch nicht immer rasch auf geänderte Szenarien an der Edge reagiert werden kann, insbesondere bei unregelmäßigen Trainings.

Edge-Lösungen sind hinsichtlich einer Vorhersage günstig, da eine Echtzeit-Kommunikation eine rasche Verarbeitung der Anwendungen erlaubt, sowie eine Unabhängigkeit von der Kommunikations-Verbindung zur Cloud vorliegt.

Jedoch kann das Lebenszyklus-Management des Modells eine erhöhte Komplexität des Modells erfordern.

In vielen Fällen wird das Modelltraining in der Cloud durchgeführt, und je nach Anwendungsanforderungen erfolgt die Vorhersage an der Edge.

Wenn Echtzeit-Aufgaben und die Verfügbarkeit keine wichtigen Erfordernisse sind, kann die Vorhersage auch in der Cloud erfolgen.

Folgende Nachteile, Einschränkungen und Herausforderungen liegen in aktuellen Cloud-Edge-Umgebungen vor:
- Kosten/ System-Komplexität: Schulungen in der Cloud sind aufgrund der oft benötigten GPU-Ressourcen für Trainingsaufgaben teuer. Vorhandene Edge-Geräte können ineffizient sein, da sie nicht für das Modelltraining verwendet werden.
- Vor-Ort (engl. "on-prem"): Elastische Skalierung der On-Prem-Infrastruktur kaum möglich. Die Infrastruktur kann zu Spitzenzeiten zu klein oder zu groß sein, wenn keine Modellaktualisierungen erforderlich sind.

Es ist daher Aufgabe der Erfindung die genannten Nachteile im Stand der Technik zu überwinden.

Die erfindungsgemäße Aufgabe wird durch ein Verfahren eingangs genannter Art gelöst, indem folgende Schritte ausgeführt werden:
S1) Erfassen einer Menge an Daten von dem technischen Gerät durch zumindest einen Sensor, welcher von der Edge-Plattform umfasst ist,
S2) Bilden von zumindest einer ersten Teilmenge und zumindest einer zweiten Teilmenge aus der Gesamtmenge an Daten (D) anhand zumindest einer vorbestimmten Metrik durch die Edge-Plattform,
S3) Übertragen der zumindest ersten Teilmenge an die Cloud-Plattform, und Erzeugen und Trainieren eines Cloud-Modells auf Basis künstlicher Intelligenz mithilfe der zumindest einen ersten Teilmenge durch die Cloud-Plattform,
S4) Übertragen des Cloud-Modells an die Edge-Plattform und Trainieren des Cloud-Modell mit der zumindest einen zweiten Teilmenge als Edge-Modell durch die Edge-Plattform,
S5) Erfassen von aktuellen Daten von dem technischen Gerät, Erzeugen von Prognose-Daten mithilfe des Edge-Modells, und Betreiben des technischen Geräts mit den Prognose-Daten, durch die Edge-Plattform.

Dadurch wird erreicht, dass ein hybrides Training mit Edge- und Cloud-Plattform durchgeführt werden kann, was insgesamt zu einer geringeren Komplexität beider Plattformen führt, und die System-Ressourcen dennoch elastisch skalierbar sind.

Ferner wird die Daten-Kommunikation zwischen Edge- und Cloud-Plattform sowie die Rechen- und Speicher-Ressourcen an der Cloud-Plattform reduziert.

Die zumindest eine erste und die zumindest eine zweite Teilmenge bilden gemeinsam die Gesamtmenge an Daten.

In einer Weiterbildung der Erfindung ist es vorgesehen, dass im Schritt S3) beim Erzeugen und Trainieren des Cloud-Modells wiederholt Trainings zumindest mit Teilen der zumindest einen ersten Teilmenge ausgeführt werden.

Dadurch kann ein effizientes Training des Cloud-Modells gewährleistet werden.

In einer Weiterbildung der Erfindung ist es vorgesehen, dass die Metrik im Schritt S2) dadurch gebildet ist, dass die zumindest eine erste und/oder zumindest eine zweite Teilmenge zufällig aus der Gesamtmenge an Daten zugeordnet werden.

Dadurch kann auf besonders einfache Weise die Teilmengenbildung implementiert werden.

In einer Weiterbildung der Erfindung ist es vorgesehen, dass die Metrik im Schritt S2) dadurch gebildet ist, dass die zumindest eine erste und/oder zumindest eine zweite Teilmenge mithilfe eines paarweisen Vergleichs von einzelnen Daten aus der Gesamtmenge an Daten unter Anwendung von Metriken wie euklidische Distanzen, Manhattan-Distanzen, Cosinus-Distanzen, dynamische Zeitnormierungs-Distanzen zugeordnet wird.

Die erfindungsgemäße Aufgabe wird auch durch ein System zum Betrieb eines technischen Geräts gelöst, aufweisend eine Cloud-Plattform und eine verbundene Edge-Plattform, welches System dazu eingerichtet ist, das Verfahren nach einem der vorhergehenden Ansprüche auszuführen.

Die erfindungsgemäße Aufgabe wird auch durch ein Computer-Programm-Produkt mit darin gespeicherten maschinenlesbaren Anweisungen gelöst, die, wenn sie von einer Verarbeitungseinheit ausgeführt werden, diese veranlassen, das erfindungsgemäße Verfahren auszuführen.

Die Erfindung wird nachfolgend anhand eines in den beigeschlossenen Zeichnungen dargestellten Ausführungsbeispiels näher erläutert. In den Zeichnungen zeigt:
- Fig. 1: ein Standard-Cloud-Edge-Architekturansatz zur Implementierung von KI- und Analyseanwendungen in einem industriellen Kontext,
- Fig. 2: ein Beispiel für den erfindungsgemäßen Architekturansatz zur Implementierung von KI- und Analyseanwendungen,
- Fig. 3: eine Darstellung der Daten-Verteilung in einer Gruppe über die Ähnlichkeit von Daten,
- Fig. 4: ein Ausführungsbeispiel für einen pseudoProgrammcode zur Bestimmung einer Distanz-Matrix,
- Fig. 5: ein Ausführungsbeispiel für einen pseudoProgrammcode zur Bestimmung von Bildern mit hoher Varianz und Bildern mit niedriger Varianz,
- Fig. 6: ein Beispiel für eine Verteilung der Teilmengen von Daten,
- Fig. 7: ein Beispiel für eine erste Teilmenge von Bilddaten in einer VQI-Anwendung,
- Fig. 8: ein Beispiel für das Training von Bilddaten mit Metriken zur Qualitäts-Überwachung,
- Fig. 9: ein Ablaufdiagramm für einen Engineering-Prozess zur Anwendung der Erfindung,
- Fig. 10: ein Beispiel für eine Implementierung einer AI-/KI-Vorlage,
- Fig. 11: ein Beispiel für einen Ablauf eines ML-Workflows,
- Fig. 12: eine Kostenberechnung für ein System nach dem Stand der Technik ohne Hybrid-Training,
- Fig. 13: eine Kostenberechnung für ein System mit erfindungsgemäßem Hybrid-Training.

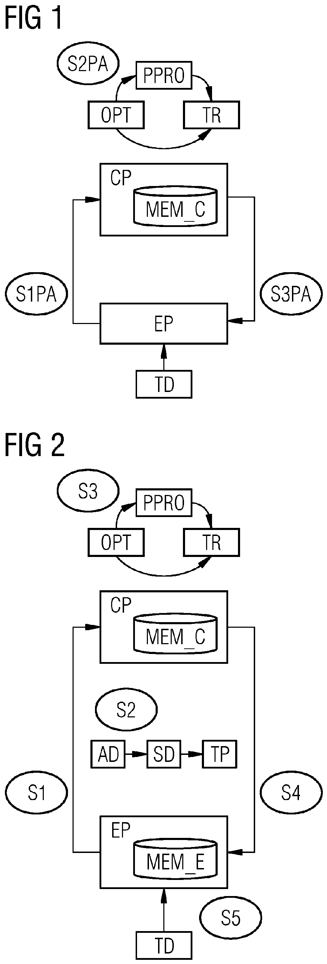

In der **Fig. 1** ist ein Standard-Cloud-Edge-Architekturansatz zur Implementierung von KI- und Analyseanwendungen in einem industriellen Kontext dargestellt.

Zu den Anwendungen gehören beispielsweise die visuelle Qualitätsprüfung oder die Energieoptimierung von Maschinen.

Die Figur zeigt eine Cloud-Plattform CP und eine verbundene Edge-Plattform EP.

Mit der Edge-Plattform EP ist ein technisches Gerät TD verbunden.

In einem ersten Schritt S1PA werden beispielsweise Daten von dem technischen Gerät TD durch entsprechende Sensoren einer Edge-Plattform EP erfasst und gesammelt, und an eine Cloud-Plattform CP übertragen und dort in einem Speicher MEM_C gespeichert.

Die Cloud-Plattform CP trainiert in einem Schritt S2PA das Modell für das technische Gerät TD und führt dabei wiederholt Optimierungen OPT, Vorverarbeitungen PPRO (engl. "preprocessing") und Trainings TR aus, um ein KI-/AI-Modell zu trainieren.

Anschließend wird das trainierte Modell in einem Schritt S3PA wieder an die Edge-Vorrichtung EP verteilt, um die Inferenz für das technische Gerät TD mit aktuellen Sensordaten zu berechnen.

In der **Fig. 2** ist ein Cloud-Edge-Architekturansatz zur Implementierung von KI- und Analyseanwendungen in einem industriellen Kontext gemäß einem Ausführungsbeispiel der Erfindung dargestellt.

Zu den Anwendungen gehören beispielsweise die visuelle Qualitätsprüfung oder die Energieoptimierung von Maschinen, aber es sind darüber hinaus auch entsprechende Steuerungen von verbundenen technischen Geräten möglich.

Die Figur zeigt eine Cloud-Plattform CP und eine verbundene Edge-Plattform EP.

Unter einer Plattform wird eine oder mehrere verbundene Rechenvorrichtungen verstanden, welche einen Prozessor und einen Speicher aufweisen. Die Plattform kann weitere Verarbeitungsvorrichtungen, Datenerfassungsvorrichtungen oder Kommunikationsvorrichtungen aufweisen.

Mit der Edge-Plattform EP ist ein technisches Gerät TD verbunden.

In einem ersten Schritt S1 werden beispielsweise Daten von dem technischen Gerät TD durch entsprechende Sensoren einer Edge-Plattform EP erfasst und gesammelt, und von einem Edge-Speicher MEM_E gespeichert.

Derartige Sensoren können beispielsweise durch eine programmierbare Steuerung (engl. "programmable logic device", kurz PLC) umfasst sein, welche vom technischen Gerät TD selbst oder der Edge-Plattform EP gebildet sein können.

Die Daten können beispielsweise Bildaufnahmen eines bildgebenden Sensors wie einer Industrie-Kamera sein, welcher zur visuellen Qualitätsinspektion (engl. "visual quality inspection", kurz VQI) eines von einer Produktionsanlage erzeugten Produkts eingesetzt wird.

Anschließend werden die gespeicherten Daten D, also eine Gesamtmenge an erfassten Bildaufnahmen, in einem Schritt S2 zunächst nach vorbestimmten Metriken analysiert.

Diese Metriken können beispielsweise eine erste Teilmenge an Bildaufnahmen DC ⊂ D mit einer hohen Varianz aus der Gesamtmenge der Bildaufnahmen D sein, und eine zweite Teilmenge an Bildaufnahmen DE ⊂ D mit einer niedrigen Varianz aus der Gesamtmenge der Bildaufnahmen D sein, wobei DE ∩ DC={ }.

Mit anderen Worten werden anhand der beiden Metriken Teilmengen der Gesamtenge an erfassten Bildaufnahmen D gebildet.

Dann wird die nur die erste Teilmenge an Bildaufnahmen DC an die Cloud-Plattform CP übertragen und dort in einem Speicher MEM_C gespeichert.

Die zweite Teilmenge DE verbleibt an der Edge-Plattform EP.

Anschließend wird im Schritt S3) ein Cloud-Modell für das technische Gerät TD durch die Cloud-Plattform CP mit der ersten Teilmenge an Bildaufnahmen DC trainiert.

Optional können dabei wiederholt Optimierungen OPT, Vorverarbeitungen PPRO (engl. "pre-processing") und Trainings TR ausgeführt werden, um das KI-/AI-Modell zu trainieren.

Anschließend wird das trainierte Modell in einem Schritt S4) wieder an die Edge-Vorrichtung EP verteilt.

Das Edge-Modell für das technische Gerät TD wird durch die Edge-Plattform EP mit der zweiten Teilmenge an Bildaufnahmen DE trainiert, wobei auch hier wiederholt Optimierungen, Vorverarbeitungen und Trainings ausgeführt werden können, um das KI-/AI-Modell zu trainieren.

Es erfolgt nun eine Modell-Verfeinerung des empfangenen Cloud-Modells mithilfe des Edge-Modells.

Dann kann die Inferenz für das technische Gerät TD mit aktuellen Sensordaten berechnet werden.

Anschließend können aktuellen Daten von dem technischen Gerät TD erfasst werden und Prognose-Daten mithilfe des Edge-Modells erzeugt werden.

Das technische Gerät TD kann nun mit den Prognose-Daten durch die Edge-Plattform EP als Schritt S5) betrieben werden.

Auf einfachstem Weg können die ersten und die zweite Teilmenge DC, DE durch eine zufällige Auswahl aus der Gesamtmenge D zugeordnet werden.

Es sind jedoch verbesserte Verfahren zur Bildung der Teilmengen möglich, beispielsweise anhand von sich zeitlich verändernden Daten oder Bilddaten eines entsprechenden Sensors an sich, wie im Weiteren dargestellt ist.

Eine Ähnlichkeitsbestimmung kann angewendet werden, um eine Gruppierung (engl. "clustering") für die Gesamtmenge D durchzuführen.

Es kann ein paarweiser Vergleich unter Anwendung von Metriken wie euklidische Distanzen, Manhatten-Distanzen, Cosinus-Distanzen, dynamische Zeitnormierungs-Distanzen ("dynamic time warping", kurz DTW) durchgeführt werden und so Zuordnungen von Daten der Gesamtmenge D zu der ersten und zweiten Teilmenge DC und DE erhalten werden.

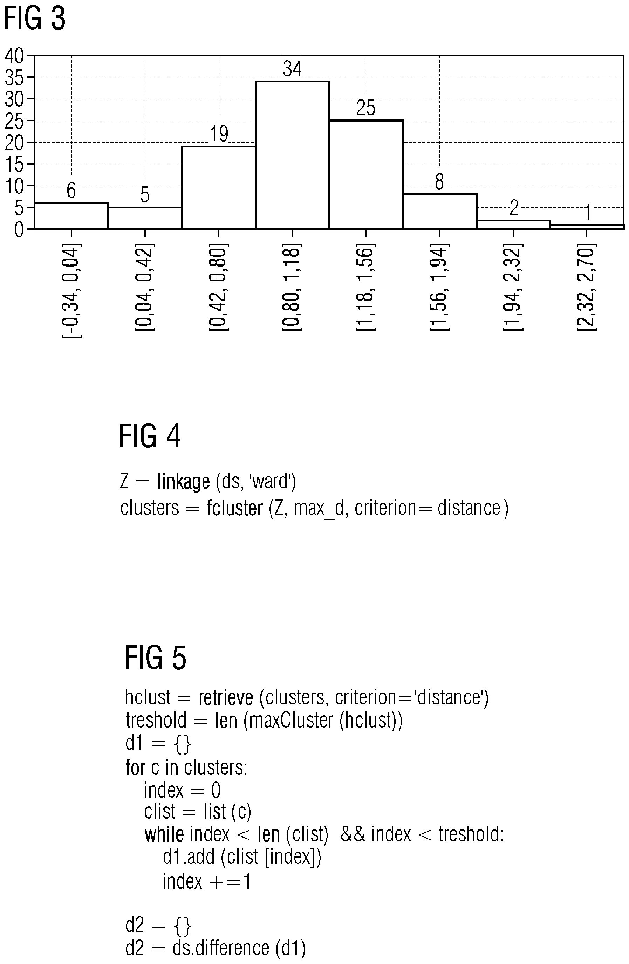

**Fig. 3** zeigt eine Darstellung der Daten-Verteilung in einer Gruppe über die Ähnlichkeit von Daten.

Die Figur zeigt Gruppen der Gesamtmenge D mit jeweils 100 Daten beziehungsweise Elementen.

Die Anzahl auf der x-Achse zeigt die Distanz bezüglich der größten Gruppe in der Datenmenge, hier die Menge mit 34 Elementen.

Im Weiteren werden die Mengen für die Gruppen als Bezeichnungen verwendet, also Gruppen 1, 2, 5, 6, 8, 19, 25 und 34.

**Fig. 4** zeigt ein Ausführungsbeispiel für einen pseudo-Programmcode zur Bestimmung einer Distanz-Matrix, welche auf der ersten Teilmenge DS basiert.

Zunächst wird eine Verknüpfungs-Matrix Z gebildet.

Eine Funktion fcluster bildet flache Gruppen von der hierarchischen Gruppierung durch die Verknüpfungs-Matrix Z, wobei max_d die maximale Tiefe zur Durchführung der Berechnung angibt.

**Fig. 5** zeigt ein Ausführungsbeispiel für einen pseudo-Programmcode zur Bestimmung von Bildern mit hoher Varianz DC und Bildern mit niedriger Varianz DE.

Dabei werden zunächst Gruppen mit hohen Varianz-Werten bestimmt, beispielsweise sind das die Gruppen 1, 2, 5, 6 und 8.

Dann werden Schwellwerte berechnet und anschließend zwei Datenmengen d1 und d1 von der Mende DS mithilfe der Schwellwerte gebildet, wobei die Menge d1 der ersten Teilmenge DC entspricht und die Menge d2 der zweiten Teilmenge DE.

Die Datenmenge d1 wird Daten mit einer hohen Varianz zugeordnet, und die Datenmenge d2 Daten mit einer niedrigen Varianz.

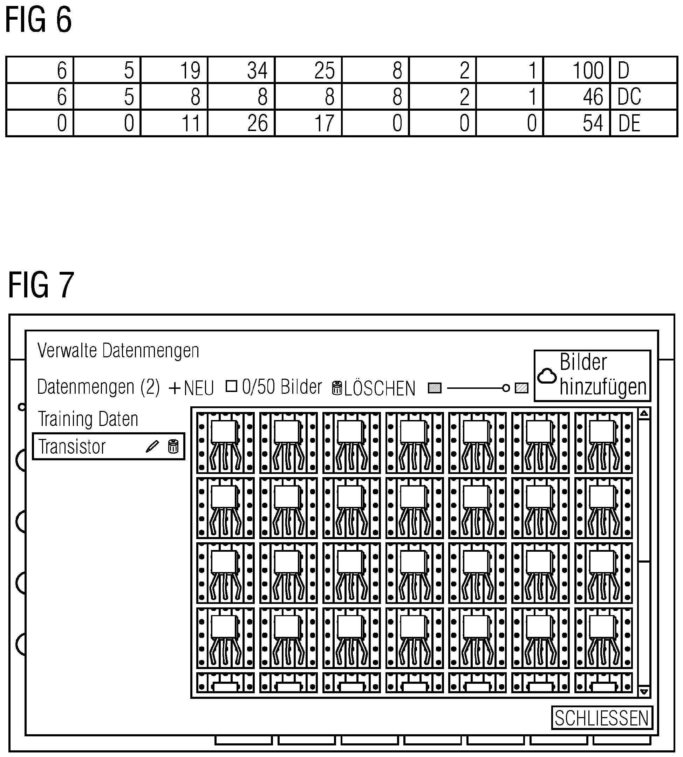

**Fig. 6** zeigt die Verteilung der beiden Datenmengen d1 und d2 über die Gruppen 1, 2, 5, 6, 8, 19, 25 und 34 der Figur 3.

Nun wird die erste Teilmenge DC an die Cloud-Plattform CP übermittelt, dort gespeichert und mit der ersten Teilmenge DC ein Training eines Cloud-Modells unter Anwendung von Kennzeichnung (engl. "labeling") Bildaufnahmen durchgeführt.

**Fig. 7** zeigt ein Beispiel für eine erste Teilmenge DC von Bilddaten in einer VQI-Anwendung.

Dargestellt sind mehrere Bildaufnahmen von Halbleiter-Transistoren mit Verbindungsdrähten auf jeweiligen Schaltungsträgern.

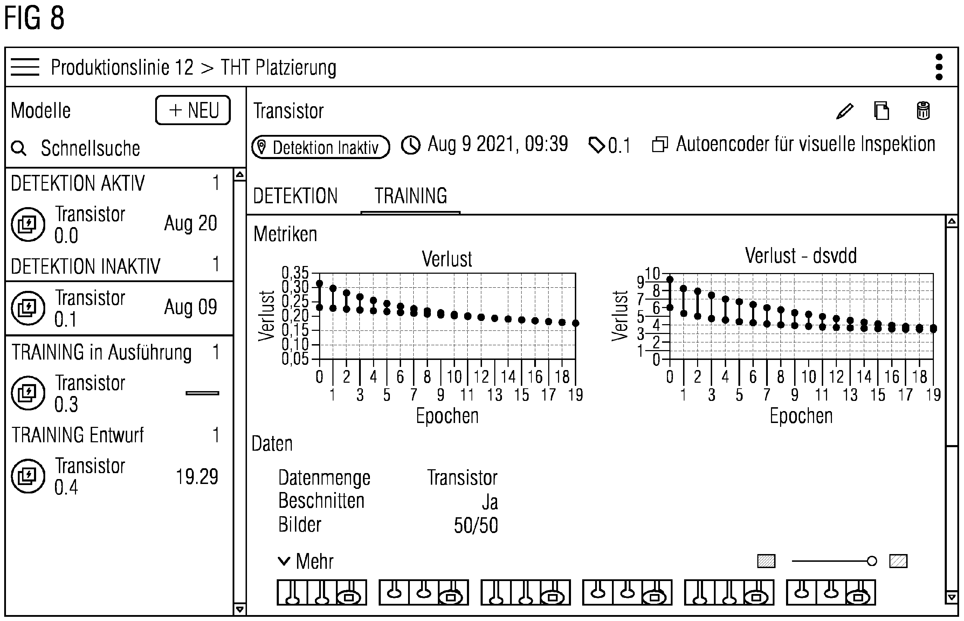

**Fig. 8** zeigt ein Beispiel für das Training der Bilddaten aus der vorhergehenden Figur unter Anwendung eines AI-Vorlagen-Konzepts.

Es sind Metriken zur Qualitäts-Überwachung graphisch dargestellt.

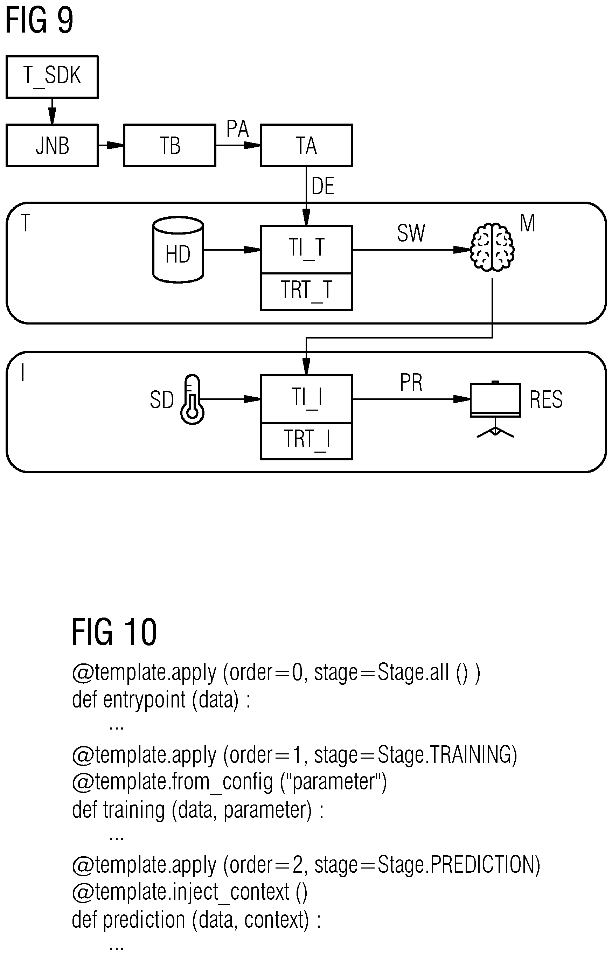

**Fig. 9** zeigt ein Ablaufdiagramm für einen Engineering-Prozess zur Anwendung der Erfindung.

Ein Datenwissenschaftler verwendet ein Vorlagen-SDK T_SDK zur Erzeugung eines ML-Codes (engl. "machine learning", kurz MKL; AI-/KI-Code) in einer Umgebung wie ein Jupyter-Notebook JNB. Eine Vorlagen-Erzeugung TB (engl. "template builder") erzeugt ein Vorlagen-Artefakt TA in einer ersten Version als Paket PA, welches an eine Trainings-Vorrichtung T oder eine Inferenz-/Prädiktions-Vorrichtung I im Schritt DE verteilt (engl. "deploy") wird.

Die Trainings-Vorrichtung T erzeugt unter Anwendung historischer Daten HD durch eine Vorlagen-Instanz für Training TI_T beziehungsweise ein Vorlagen-Ausführungsmodul TRT_T für Training ein Modell M und sichert dazugehörige Modell-Gewichte im Schritt SW in einem Speicher, beispielsweise in einer leistungsfähigen Cluster-Umgebung wie AWS SageMaker.

Die Inferenz-Vorrichtung I wendet erfasste Sensordaten SD durch eine Vorlagen-Instanz für Inferenz TI_I beziehungsweise ein Vorlagen-Ausführungsmodul TRT_I für Inferenz auf das Modell-M an und präsentiert im Schritt PR Ergebnisse RES.

**Fig. 10** zeigt ein Beispiel für eine Implementierung einer AI-/KI-Vorlage.

Dabei werden sogenannte "Dekoratoren" verwendet, welche vom SDK bereitgestellt werden, um Funktionen im Code mit Meta-Informationen zu kennzeichnen, welches ein "design pattern" in Python darstellt und es Benutzern erlaubt, neue Funktionen zu einem bereits bestehenden Objekt zu ergänzen, ohne ihre Struktur zu ändern.

Dekoratoren werden normalerweise zuerst aufgerufen, bevor die zu dekorierende Funktion definiert wird.

Durch den beschriebenen Ansatz wird die Definition von Verarbeitungspipelines vereinfacht, mehr organisiert und strukturiert, und Funktionen werden in der vorgegebenen Reihenfolge ausgeführt.

Ferner kann eine Trennung einzelner Stufen erreicht werden, wie eine Batch- und kontinuierliche Ausführung für Training und Vorhersage.

Außerdem werden Konfigurations- und Kontextinjektionen ermöglicht, womit Konfigurationen können aus JSON-basierten Dateien geladen werden können (siehe im Code "from_config").

Ein Kontext ist ein Objekt, das von nachfolgenden Funktionsaufrufen übergeben werden kann , beispielsweise um Ergebnisse aus früheren Funktionen weiterzuführen.

Zusätzlich kann eine grundlegende Datenaggregation für Eingabedaten erfolgen.

Ferner ist der neue Ansatz agnostisch gegenüber Data-Science-Frameworks, wie Tensorflow, Pytorch oder dergleichen.

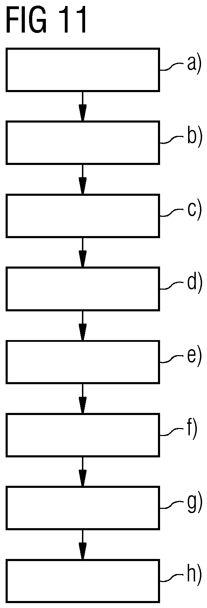

**Fig. 11** zeigt ein Beispiel für einen Ablauf des beschriebenen ML-Workflows.

Schritt a) bezeichnet die Kennzeichnung (engl. "labeling") von der ersten Teilmenge DC in der Cloud-Plattform PC.

Im Schritt b) läuft die Trainings-Stufe für die Vorlage von DC.

Im Schritt c) wird eine verteilbare Vorlage inklusive Modell-Gewichten erzeugt.

Anschließend wird im Schritt d) eine Vorlage zur Edge-Plattform EP geladen.

Dann wird im Schritt e) eine Inferenz-/Prädiktions-Stufe der Vorlage auf die zweite Teilmenge DE ausgeführt, um eine automatische Kennzeichnung (engl. "auto-labeling") durchzuführen.

Im Schritt f) kann bei Bedarf optional eine manuelle Korrektur durch einen Bediener erfolgen.

Im Schritt g) wird eine Trainings-Stufe mit der zweiten Teilmenge ausgeführt, um eine Modell-Verfeinerung zu erreichen.

Dann erfolgt im Schritt h) ein Ausführen der Inferenz-/Prädiktions-Stufe der Vorlagen auf Basis neuer Sensordaten SD.

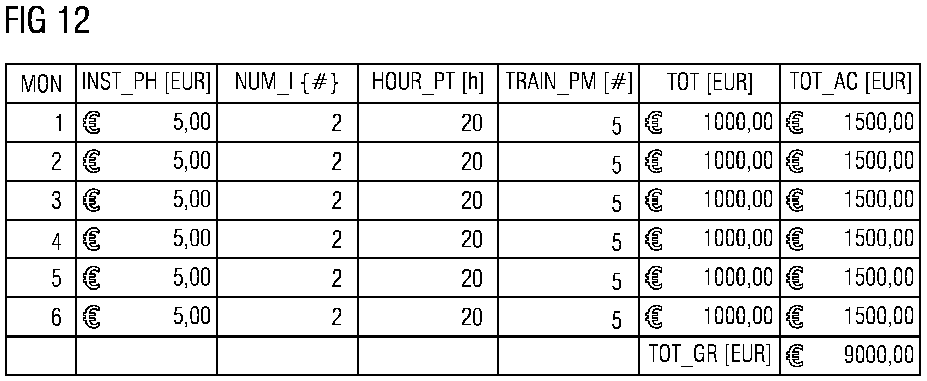

**Fig. 12** zeigt eine Kostenberechnung für ein System nach dem Stand der Technik ohne Hybrid-Training.

In der ersten Spalte sind Monate MON, angeführt, gefolgte von Spalten für Instanzen pro Stunde INST_PH, Anzahl der Instanzen NUM_I, Stunden pro Training HOUR_PT, Trainings pro Monat TRAIN_PM, eine Teilsumme/Total TOT, eine Teilsumme mit Hilfskosten TOT_AC, eine Gesamtsumme TOT_GR und einen Unterschied DELTA.

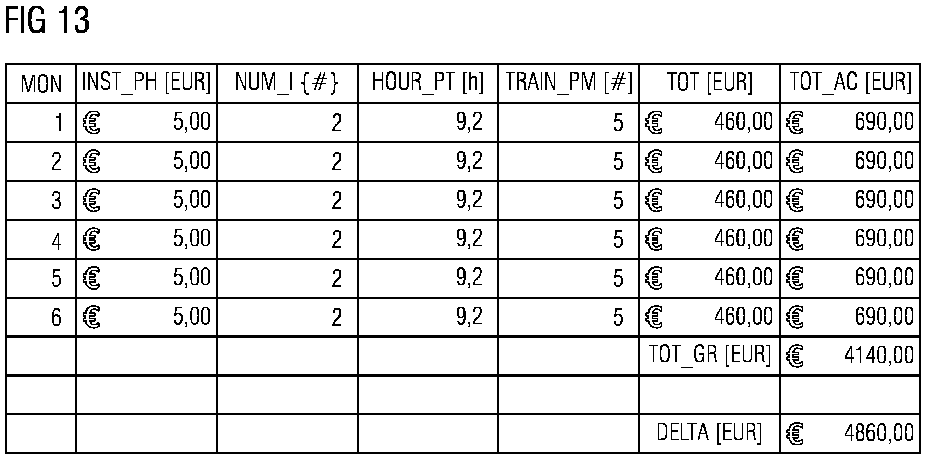

**Fig. 13** zeigt eine Kostenberechnung für ein System mit Hybrid-Training, bei welchem die Trainingszeit um mehr als 50% reduziert wird und die Gesamtkosten gesenkt werden.

Die Tabelle zeigt dieselben Spalten der vorhergehenden Figur. Es ist zu erkennen, dass nach 6 Monaten Betrieb eines solches Systems fast 5.000 EUR eingespart werden konnten.

### Bezugszeichenliste:

- AD: Analyse der Daten
- CP: Cloud-Plattform
- D: Datenmenge
- d1: Datenmenge mit hoher Varianz
- d2: Datenmenge mit niedriger Varianz
- DC: Datenmenge in Cloud
- DE: Datenmenge an Edge
- DE: Verteilen (engl. "deploy")
- DELTA: Unterschied
- EP: Edge-Plattform
- HD: historische, gespeicherte Daten
- HOUR_PT: Stunden pro Training
- I: Inferenz
- INST_PH: Instanz pro Stunde
- JNB: Jupyter Notebook
- M: Modell für Training, erste Version
- MEM_C, MEM_E: Speicher von Cloud/Edge
- MON: Monat
- NUM_I: Anzahl der Instanzen
- PA: Packet
- PR: Präsentation
- RES: Ergebnisse
- S1PA, S2PA, S3PA, S1-S4, a)-h): process steps
- SD: Sensor-Daten
- SD: Teile Daten in Teilmenge
- SW: Speichern von Modell-Gewichten
- T: Training
- T_SDK: Vorlage SDK (engl. "system design kit", kurz "SDK")
- TA: Vorlagen-Artefakt, erste Version
- TB: Vorlagen-Erzeugung (engl. "template builder")
- TD: technisches Gerät (engl. "technical device)
- TI_I: Vorlagen-Instanz für Inferenz
- TI_T: Vorlagen-Instanz für Training
- TOT: Total, Teilsumme
- TOT_AC: Total, Teilsumme mit Hilfskosten
- TOT_GR: Insgesamt, Gesamtsumme
- TP: Übertragung von Teilmenge
- TRAIN_PM: Trainings pro Monat
- TRT_I: Vorlagen-Ausführungsmodul für Inferenz
- TRT_T: Vorlagen-Ausführungsmodul für Training
- Z: Verknüpfungs-Matrix

## Patentansprüche

1. Computer-implementiertes Verfahren zum Betrieb eines technischen Geräts (TD) durch ein System mit einer Cloud-Plattform (CP) und einer verbundenen Edge-Plattform (EP), wobei folgende Schritte ausgeführt werden:
S1) Erfassen einer Menge an Daten (D) von dem technischen Gerät (TD) durch zumindest einen Sensor, welcher von der Edge-Plattform (EP) umfasst ist,
S2) Bilden von zumindest einer ersten Teilmenge (DC) und zumindest einer zweiten Teilmenge (DE) aus der Gesamtmenge an Daten (D) anhand zumindest einer vorbestimmten Metrik durch die Edge-Plattform (EP),
S3) Übertragen der zumindest ersten Teilmenge (DC) an die Cloud-Plattform (CP), und Erzeugen und Trainieren eines Cloud-Modells auf Basis künstlicher Intelligenz mithilfe der zumindest einen ersten Teilmenge (DC) durch die Cloud-Plattform (CP),
S4) Übertragen des Cloud-Modells an die Edge-Plattform (EP) und Trainieren des Cloud-Modell mit der zumindest einen zweiten Teilmenge (DE) als Edge-Modell durch die Edge-Plattform (EP),
S5) Erfassen von aktuellen Daten von dem technischen Gerät, Erzeugen von Prognose-Daten mithilfe des Edge-Modells, und Betreiben des technischen Geräts (TD) mit den Prognose-Daten, durch die Edge-Plattform (EP).

2. Verfahren nach dem vorhergehenden Anspruch, wobei im Schritt S3) beim Erzeugen und Trainieren des Cloud-Modells wiederholt Trainings (TR) zumindest mit Teilen der zumindest einen ersten Teilmenge (DC) ausgeführt werden.

3. Verfahren nach einem der vorhergehenden Ansprüche, wobei die Metrik im Schritt S2) dadurch gebildet ist, dass die zumindest eine erste und/oder zumindest eine zweite Teilmenge (DC, DE) zufällig aus der Gesamtmenge an Daten (D) zugeordnet werden.

4. Verfahren nach einem der vorhergehenden Ansprüche, wobei die Metrik im Schritt S2) dadurch gebildet ist, dass die zumindest eine erste und/oder zumindest eine zweite Teilmenge (DC, DE) mithilfe eines paarweisen Vergleichs von einzelnen Daten aus der Gesamtmenge an Daten (D) unter Anwendung von Metriken wie euklidische Distanzen, Manhattan-Distanzen, Cosinus-Distanzen, dynamische Zeitnormierungs-Distanzen zugeordnet wird.

5. Vorrichtung zum Betrieb eines technischen Geräts (TD) durch ein System, aufweisend eine Cloud-Plattform (CP) und eine verbundene Edge-Plattform (EP), welches System dazu eingerichtet ist, das Verfahren nach einem der vorhergehenden Ansprüche auszuführen.

6. Computer-Programm-Produkt mit darin gespeicherten maschinenlesbaren Anweisungen, die, wenn sie von einer Verarbeitungseinheit ausgeführt werden, diese veranlassen, das Verfahren nach einem der Ansprüche 1 bis 4 auszuführen.
